# EUROPEAN PATENT SPECIFICATION

(11) **EP 0 619 199 B1**
(45) Date of publication and mention of the grant of the patent: **06.08.1997**
(21) Application number: 94302279.8
(22) Date of filing: 29.03.1994
(51) Int. Cl.: B60J 10/04

(54) **Sealing and wiping arrangement**
Dichtungs- und Wischanordnung
Dispositif d'étanchéité et d'essuyage

(30) Priority: 05.04.1993 DE 4311156
(43) Date of publication of application: 12.10.1994
(73) Proprietor: DRAFTEX INDUSTRIES LIMITED, Edinburgh EH3 6YY, Scotland (GB)
(72) Inventor: SCHRODER, FRANZ, D-5609 HÜCKESWAGEN (DE); ANDRA, RAINER, D-6250 LIMBURG 5 (DE); VERING, HEINZ, D-5830 SCHWELM (DE)
(74) Representative: Foster, David Martyn

(56) References cited:
- DE-A- 1 683 530
- FR-A- 2 631 413
- GB-A- 2 221 238
- US-A- 2 664 603

## Description

The invention relates to a sealing and wiping arrangement made of flexible material for sealing and wiping against a slidably movable window pane in a window opening of a motor vehicle, comprising a longitudinally extending strip arranged for mounting alongside an edge of the window opening adjacent the path of sliding movement of the window pane, the material of the strip defining a surface having a sealing zone for making area sealing contact with the sliding window pane, a cavity in the material of the strip and having a resilient outer wall portion extending longitudinally of the strip and defining at least part of the said surface, a protrusion on the outer wall portion of the cavity and extending both longitudinally along the strip and towards the path of sliding movement of the window pane so as to wipe the window pane as the latter slidably moves, the protrusion being resiliently movable with the resilient outer wall portion of the cavity in directions substantially perpendicular to the sliding movement of the window pane.

Such an arrangement is shown in GB-A-2 221 238. In this arrangement, the strip comprises a longitudinally extending cavity whose outer wall portion carries the surface with the sealing zone thereon as well as the protrusion. Movement of the protrusion in the direction substantially perpendicular to the sliding movement of the window glass depresses the outer wall portion into the cavity and thus moves the sealing zone away from the window glass. Such an arrangement therefore reduces the sealing effectiveness of the sealing zone. The invention aims to overcome this problem.

Such an arrangement is also shown in US-A-5 085 005. Again, however, the sealing zone extends over the outer wall portion of the cavity and may be lifted off the window pane by the movement of the protrusion. The zone cannot therefore provide continuous sealing contact against the window pane.

The invention aims to overcome this problem.

Therefore, the known arrangement as first set forth above (GB-A-2 221 238) is characterised, in accordance with the invention, in that the protrusion is in the form of a wiper blade which is also resiliently movable relative to the said surface in the directions of sliding movement of the window pane, and in that the cavity and the outer wall portion thereof are local to the wiper blade so that the position of the strip relative to the path of sliding movement of the window pane, and the area contact of the sealing zone with the window pane are substantially unaffected by any said movement of the wiper blade, and the surface of the sealing zone acts as a continuous seal against the window pane.

Further developments in line with claim 1 are referred to in the dependent claims 2 to 7.

Sealing and wiping arrangements will now be described, by way of example only, with reference to the accompanying diagrammatic drawings in which:
Figure 1 is a side view of one of the arrangements, showing it in use;
Figure 2 is a view corresponding to Figure 1 showing a modified form of the arrangement;
Figure 3 corresponds to Figures 1 and 2 and shows a further modified arrangement; and
Figure 4 corresponds to the preceding Figures and shows yet another modification of the arrangement.

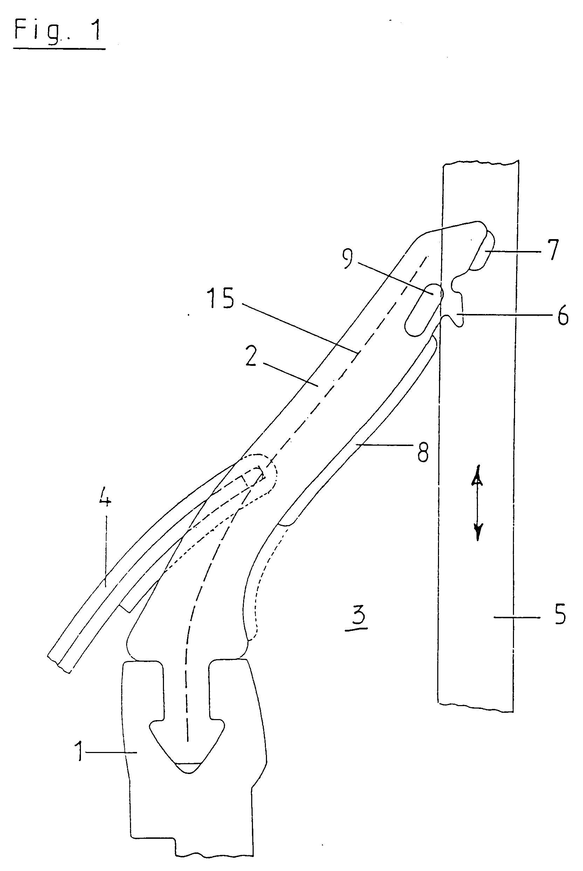

As shown in Figure 1, a rigid carrier member, forming part of the door of a motor vehicle, carries a flexible sealing lip 2. The sealing lip 2 is directed angularly across the adjacent window opening 3 in the vehicle door through which the window pane 5 is slidably movable in an upward and downward direction.

A panel edge 4, forming part of the vehicle door, engages the outer surface of the sealing lip 2.

The sealing lip 2 has a sealing area having an upper portion 7 and a lower and substantially deeper portion 8. The sealing lip extends across the full width of the window, as do the sealing portions 7 and 8. The sealing portions 7 and 8 may be advantageously covered with flock secured to the sealing lip 2 such as by a modified polyurethane adhesive. Polyester 3.3d tex may be used, for example. As the window glass slides up and down, the sealing portions 7 and 8 maintain sealing contact with the glass and help to prevent ingress of drafts and water into the interior of the door and into the interior of the vehicle.

In addition, however, the sealing and wiping arrangement includes a wiper lip 6. This is integrally carried by the sealing lip 2 and, as shown in Figure 1 is positioned within the sealing area and, in particular, between the portions 7 and 8 of the sealing area. The wiper lip 6 extends across the width of the window glass 5.

As the window glass 5 is raised and lowered in sliding contact with the sealing lip 2, the wiper lip 6 wipes, and cleans, the surface of the window glass.

As shown in Figure 1, the wiper lip 6 is mounted on the outer flexible wall of a cavity 9 which is incorporated into the sealing lip 2 and is located immediately behind the wiper lip 6.

As the window glass 5 moves upwardly and downwardly, the lip 6 flexes slightly in an upward and downward direction, corresponding with the movement of the window glass 5, and this improves its wiping action. In addition, however, the provision of the cavity 9 enables the wiper lip 6 to move in a direction substantially perpendicular to the plane of the window glass 5. This ability of the wiper lip 6, to flex in a direction perpendicular to the surface of the window glass 5, because of the provision of the cavity 9, is advantageous in that it enables the arrangement to accommodate quite large tolerances which may in practice exist in the distance between the surface of the window glass on the one hand and the mounting of the sealing lip 2 on the other. In practice, it is found that this distance can vary by as much as ^{±} 2.5 millimeters, giving a total possible range of 5 millimeters. Such large tolerances can be accommodated by the wiper blade 6, and its cleaning function is substantially improved.

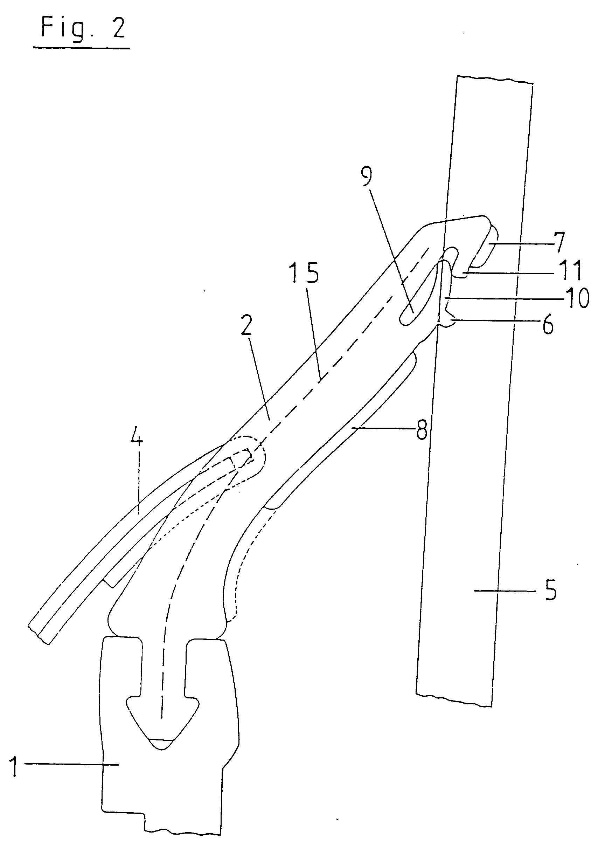

Advantageously, the sealing lip 2 is reinforced by a metal reinforcement strip 15. This may be made of spring steel and may have any suitable construction, being, for example, about 0.1 millimeters thick. Its presence increases the efficiency of operation of the sealing lip 2 and ensures that it maintains proper sealing and wiping contact with the surface of the window glass over extended periods of time. The sealing lip 2 may be made of any suitable elastomer or thermoplastic material, a combination of such materials, or any other suitable material. Advantageously, the sealing lip is produced by extrusion and the metal reinforcement 15 may be incorporated into the extruded material by means of a cross-head extrusion process. Parts in Figures 2,3 and 4 corresponding to those in Figure 1 are similarly referenced.

The arrangement shown in Figure 2 differs from that in Figure 1 in that the cavity 9 is not a closed cavity. Its front wall is constituted by a tongue 10 which is flexible and carries the wiper lip 6. The tongue 10 is extended so as to engage under a web 11. Such an arrangement also enables the wiper lip 6 to flex in an upward and downward direction corresponding to movement of the window pane 5 and also to move in a direction which is generally perpendicular to these directions.

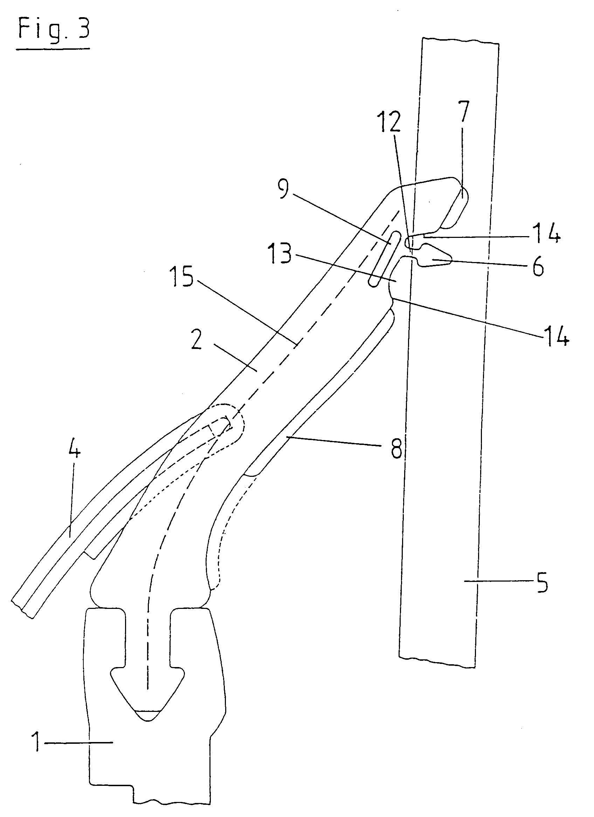

The arrangement shown in Figure 3 is somewhat similar to that shown in Figure 1, except that the wiper lip is carried by a flexible connecting web 12 of reduced thickness, and the wiper lip 6 is itself of triangular cross-section. Such a construction increases the ability of the wiper lip 6 to flex in an upward and downward direction, corresponding to sliding movement of the window glass. In addition, of course, the provision of the cavity 9 enables the wiper lip to move in the perpendicular direction.

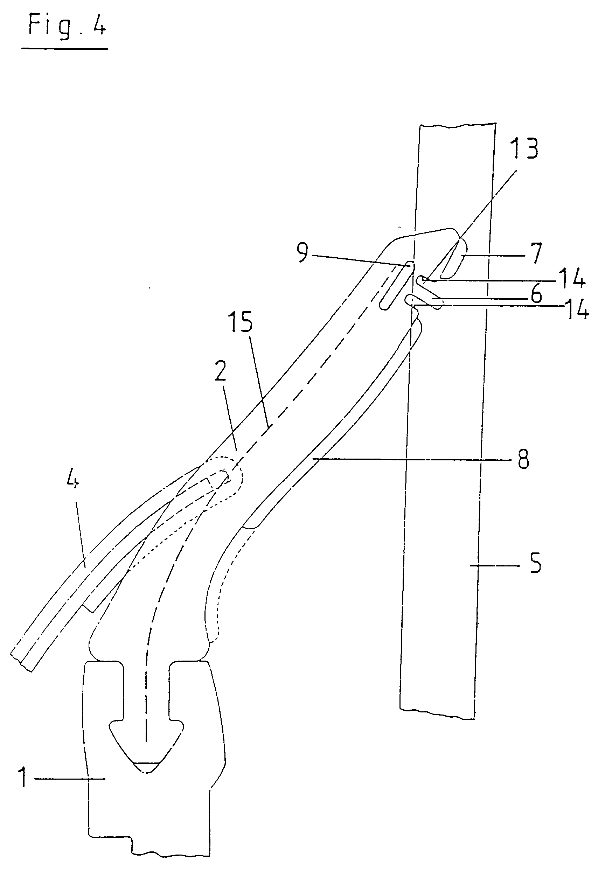

In Figure 4, the wiper blade 6 is constrained to be movable between stop faces 14 defining free spaces 13. The operation is otherwise as already described.

## Claims

1. A sealing and wiping arrangement made of flexible material for sealing and wiping against a slidably movable window pane (5) in a window opening (3) of a motor vehicle, comprising a longitudinally extending strip (2) arranged for mounting alongside an edge of the window opening (3) adjacent the path of sliding movement of the window pane (5), the material of the strip (2) defining a surface having a sealing zone (7,8) for making area sealing contact with the sliding window pane (5), a cavity (9) in the material of the strip and having a resilient outer wall portion extending longitudinally of the strip (2) and defining at least part of the said surface, a protrusion (6) on the outer wall portion of the cavity (9) and extending both longitudinally along the strip (2) and towards the path of sliding movement of the window pane (5) so as to wipe the window pane (5) as the latter slidably moves, the protrusion (6) being resiliently movable with the resilient outer wall portion of the cavity (9) in directions substantially perpendicular to the sliding movement of the window pane (5), characterised in that the protrusion is in the form of a wiper blade (6) which is also resiliently movable relative to the said surface in the directions of sliding movement of the window pane (5), and in that the cavity (9) and the outer wall portion thereof are local to the wiper blade (6) so that the position of the strip (2) relative to the path of sliding movement of the window pane (5), and the area contact of the sealing zone (7,8) with the window pane (5) are substantially unaffected by any said movement of the wiper blade (6), and the surface of the sealing zone (7,8) acts as a continuous seal against the window pane (5).

2. An arrangement according to claim 1, characterised in that the sealing zone (7,8) is interrupted in the region of the wiper blade (6).

3. An arrangement according to claim 1 or 2, characterised in that the cavity (9) is a cavity which is closed by the outer wall portion thereof.

4. An arrangement according to claim 1 or 2, characterised in that the cavity (9) is in the form of a channel, the outer wall portion (10) extending across the mouth of the channel from one longitudinally extending edge of the mouth towards but not connected to the other longitudinally extending mouth edge whereby the outer wall portion (10) can flex inwardly of the cavity (9) in response to movement of the wiper blade (6) in the said perpendicular directions.

5. An arrangement according to any preceding claim, characterised in that the said surface is formed with a longitudinally extending recess (13) the base of which is formed by the outer wall portion.

6. An arrangement according to any preceding claim, characterised in that the wiper blade (6) has a triangular cross-section head integrally mounted on a narrowed and flexible web (12).

7. An arrangement according to any preceding claim, characterised in that the material of the strip has an embedded metal reinforcement (15).

## Patentansprüche

1. Dicht- und Wischanordnung, die aus elastischem Material hergestellt ist, zum Dichten und Wischen an einer gleitend beweglichen Fensterscheibe (5) in einer Fensteröffnung (3) eines Kraftfahrzeugs, wobei die Anordnung folgendes umfaßt: einen sich in Längsrichtung erstreckenden Streifen (2), der so angeordnet ist, daß er entlang einer Kante der Fensteröffnung (3) neben dem Weg der gleitenden Bewegung der Fensterscheibe (5) angebracht werden kann, wobei das Material des Streifens (2) eine Fläche mit einer Dichtzone (7, 8) definiert, um flächigen Dichtkontakt mit der gleitenden Fensterscheibe (5) herzustellen, einen Hohlraum (9) im Material des Streifens und mit einem elastischem Außenwandteil, der sich entlang der Länge des Streifens (2) erstreckt und mindestens einen Teil der Fläche definiert, einen Vorsprung (6), der sich am Außenwandteil des Hohlraums (9) befindet und sich sowohl entlang der Länge des Streifens (2) als auch in Richtung des Weges der Gleitbewegung der Fensterscheibe (5) erstreckt, um die Fensterscheibe (5) zu wischen, während sie sich gleitend bewegt, wobei sich der Vorsprung (6) mit dem elastischen Außenwandteil des Hohlraums (9) elastisch in Richtungen bewegen läßt, die im wesentlichen senkrecht zur Gleitbewegung der Fensterscheibe (5) liegen, dadurch gekennzeichnet, daß der Vorsprung die Form eines Wischerblatts (6) aufweist, das auch bezüglich der Fläche in den Richtungen der Gleitbewegung der Fensterscheibe (5) elastisch beweglich ist, und daß der Hohlraum (9) und sein Außenwandteil auf das Wischerblatt (6) beschränkt sind, so daß die Lage des Streifens (2) bezüglich des Weges der Gleitbewegung der Fensterscheibe (5) und der flächige Kontakt der Dichtzone (7, 8) mit der Fensterscheibe (5) durch eine beliebige Bewegung des Wischerblatts (6) nicht beeinflußt wird und die Fläche der Dichtzone (7, 8) als kontinuierliche Dichtung an der Fensterscheibe (5) wirkt.

2. Anordnung nach Anspruch 1, dadurch gekennzeichnet, daß die Dichtzone (7, 8) im Bereich des Wischerblattes unterbrochen ist.

3. Anordnung nach Anspruch 1 oder 2, dadurch gekennzeichnet, daß der Hohlraum (9) ein Hohlraum ist, der durch seinen Außenwandteil abgeschlossen ist.

4. Anordnung nach Anspruch 1 oder 2, dadurch gekennzeichnet, daß der Hohlraum (9) die Form eines Kanals aufweist, wobei sich der Anßenwandteil (10) über die Öffnung des Kanals von einer sich in Längsrichtung erstreckenden Kante der Öffnung zu der anderen sich in Längsrichtung erstreckenden Öffnungskante erstreckt, aber nicht mit dieser verbunden ist, wodurch sich der Außenwandteil (10) als Reaktion auf Bewegung des Wischerblattes (6) in den senkrechten Richtungen in das Innere des Hohlraums biegen kann.

5. Anordnung nach einem der vorhergehenden Ansprüche, dadurch gekennzeichnet, daß die Fläche mit einer sich in Längsrichtung erstreckenden Ausnehmung (13) gebildet ist, deren Boden durch den Außenwandteil gebildet ist.

6. Anordnung nach einem der vorhergehenden Ansprüche, dadurch gekennzeichnet, daß das Wischerblatt (6) einen Kopf mit dreieckigem Querschnitt aufweist, der an einem verengten und elastischen Steg (12) einstückig angebracht ist.

7. Anordnung nach einem der vorhergehenden Ansprüche, dadurch gekennzeichnet, daß das Material des Streifens eine eingebettete Verstärkung (15) aus Metall aufweist.

## Revendications

1. Dispositif d'étanchéité et d'essuyage fait d'une matière flexible et destiné à former un joint étanche contre une vitre (5) mobile par coulissement dans une baie de fenêtre (3) d'un véhicule à moteur et à essuyer cette vitre, comprenant une bande (2) s'étendant longitudinalement, agencée pour être montée le long d'un bord de la baie de fenêtre (3) dans une position adjacente au trajet du mouvement coulissant de la vitre (5), la matière de la bande (2) définissant une surface ayant une zone d'étanchéité (7, 8) destinée à former un contact étanche par surface complète avec la vitre coulissante (5), une cavité (9) ménagée dans la matière de la bande et possédant une portion de paroi extérieure élastique qui s'étend selon la longueur de la bande (2) et définit au moins une partie de ladite surface, une protubérance (6) formée sur la portion de paroi extérieure de la cavité (9) et qui s'étend à la fois longitudinalement le long de la bande (2) et en direction du trajet du mouvement coulissant de la vitre (5), de manière à essuyer la vitre (5) lorsque cette dernière se déplace en coulissant, la protubérance (6) pouvant se déplacer élastiquement avec la portion de paroi extérieure élastique de la cavité (9) dans des directions sensiblement perpendiculaires au mouvement coulissant de la vitre (5), caractérisé en ce que la protubérance revêt la forme d'une lame essuyeuse (6) gui peut aussi se déplacer élastiquement par rapport à ladite surface dans les directions du mouvement coulissant de la vitre (5) et en ce que la cavité (9) et sa portion de paroi extérieure sont voisines de la lame essuyeuse (6), de sorte que la position de la bande (2) par rapport au trajet du mouvement coulissant de la vitre (5) et le contact par surface complète de la zone d'étanchéité (7, 8) avec la vitre (5) ne sont pas sensiblement affectées par le mouvement de la lame essuyeuse (6), et que la surface de la zone d'étanchéité (7, 8) se comporte comme un joint continu contre la vitre (5).

2. Dispositif selon la revendication 1, caractérisé en ce que la zone d'étanchéité (7, 8) est interrompue dans la région de la lame essuyeuse (6).

3. Dispositif selon la revendication 1 ou 2, caractérisé en ce que la cavité (9) est une cavité qui est fermée par sa portion de paroi extérieure.

4. Dispositif selon la revendication 1 ou 2, caractérisé en ce que la cavité (9) revêt la forme d'une gouttière, la portion de paroi extérieure (10) s'étendant en travers de la bouche de la gouttière, d'un bord longitudinal de la bouche vers l'autre bord longitudinal de la bouche sans y être reliée, de sorte que la portion de paroi extérieure (10) peut fléchir vers l'intérieur de la cavité (9) en réponse au mouvement de la lame essuyeuse (6) dans lesdites directions perpendiculaires.

5. Dispositif selon une quelconque des revendications précédentes, caractérisé en ce que ladite surface est munie d'un évidement (13) s'étendant longitudinalement, dont le fond est formé par la portion de paroi extérieure.

6. Dispositif selon une quelconque des revendications précédentes, caractérisé en ce que la lame essuyeuse (6) a une tête de section triangulaire montée d'un seul tenant sur un voile (12) aminci et flexible.

7. Dispositif selon une quelconque des revendications précédentes, caractérisé en ce que la matière de la bande comporte un renforcement métallique noyé (15).
